# FASCICULE DE BREVET EUROPEEN

(11) **EP 0 466 867 B1**
(45) Date de publication et mention de la délivrance du brevet: **18.05.1994**
(21) Numéro de dépôt: 91903011.4
(22) Date de dépôt: 01.02.1991
(51) Int. Cl.: F16B 12/02, F16B 12/44

(54) **DISPOSITIF DE FIXATION DE PANNEAUX DESTINES A FORMER UN MEUBLE OU SIMILAIRE**
VORRICHTUNG ZUR BEFESTIGUNG VON TAFELN ZUM AUFBAU VON MÖBELN ODER DERGLEICHEN
DEVICE FOR FIXING PANELS FOR CONSTRUCTING A PIECE OF FURNITURE OR THE LIKE

(30) Priorité: 08.02.1990 CH 398/90
(43) Date de publication de la demande: 22.01.1992
(73) Titulaire: Duc, Jean-Luc, CH-3971 Chermignon d'en bas (CH)
(72) Inventeur: Duc, Jean-Luc, CH-3971 Chermignon d'en bas (CH)
(74) Mandataire: Ganguillet, Cyril
(86) Numéro de dépôt international: CH9100026
(87) Numéro de publication internationale: WO9112435

(56) Documents cités:
- DD-A- 218 418
- DE-A- 2 902 307
- FR-A- 908 935

## Description

La présente invention concerne un dispositif de fixation de panneaux entre eux destinés à former un meuble, une étagère, une armoire ou similaire, selon le préambule de la revendication 1.

Un tel dispositif est connu, par exemple, du document FR-A-908 935.

Il existe de nombreux dispositifs de fixation au moyen desquels il est possible de relier ensemble deux panneaux en vue de former, par exemple, une étagère, à savoir :
- au moyen de vis et écrous avec une équerre;
- au moyen d'éléments mâle et femelle montés respectivement sur chacun des deux panneaux et conçus de manière à ce que lors de l'assemblage de ces derniers ils s'emboîtent l'un dans l'autre; ou encore
- au moyen d'un gougeon dont une extrémité est en prise avec un excentrique monté à l'intérieur de l'autre panneau, de manière que, par rotation de l'excentrique, les deux panneaux soient pressés l'un en direction de l'autre.

En principe, lorsque deux panneaux sont reliés entre eux, le bord de l'un vient se plaquer contre une face de l'autre.

Les systèmes de fixation mentionnés ci-dessus sont peut-être bien adaptés aux cas de panneaux pleins, mais présentent des inconvénients dans le cas des panneaux creux, du genre constitués par exemple de deux plaques, jointes à leur pourtour à l'aide d'un cadre; en effet, lorsque de tels panneaux creux sont reliés entre eux à l'aide de dispositifs de fixation connus jusqu'à ce jour, ils sont soumis à des contraintes de flexion, torsion, pression et cisaillement qui les détérioreront par déformation locale ou d'ensemble.

Le problème posé ci-dessus est résolu grâce au dispositif de fixation selon la revendication 1.

Il est maintenant décrit un mode de réalisation de fixation de deux panneaux destinés à former une étagère et reliés entre eux à l'aide de deux dispositifs selon l'invention.

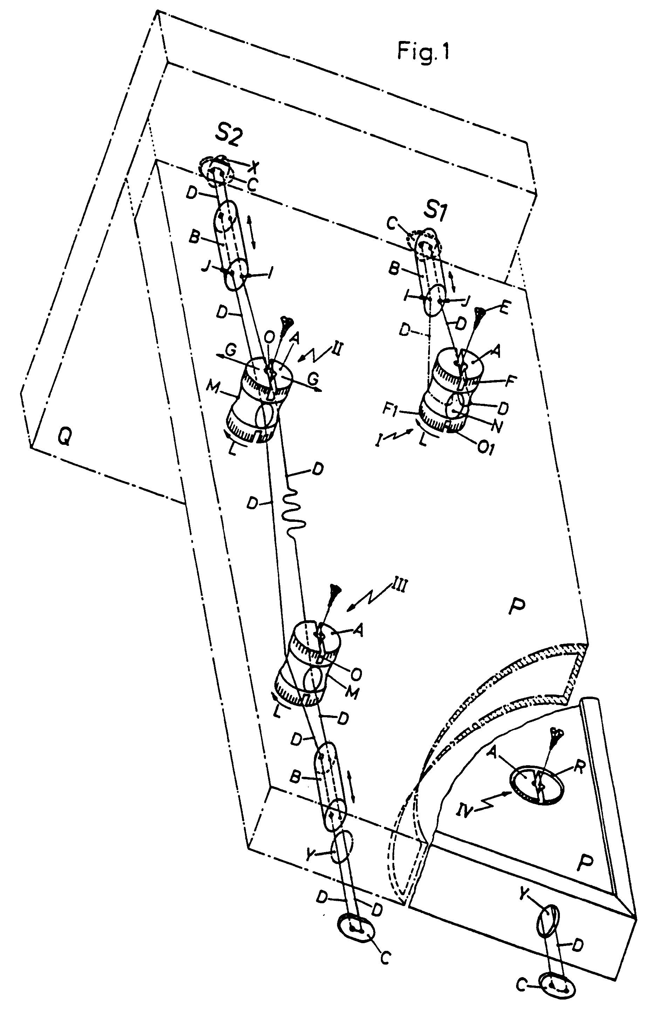

La figure 1 représente deux panneaux creux P, Q de façon schématique et en traits mixtes pour faciliter la compréhension du dessin. Les deux panneaux P, Q sont rectangulaires pour former une étagère. Un panneau P, horizontal, doit être fixé à un autre panneau Q, vertical, de manière qu'un bord de panneau horizontal vienne en contact avec une des faces du panneau vertical Q et qu'ainsi les deux panneaux P, Q soient perpendiculaires l'un à l'autre après montage.

Bien sûr, un panneau horizontal P est relié simultanément à deux panneaux verticaux Q opposés l'un à l'autre. Toutefois, dans la figure 1, le second panneau Q n'a pas été représenté pour ne pas compliquer inutilement le dessin.

Le panneau horizontal P est fixé au panneau vertical à l'aide de deux dispositifs de fixation S1 et S2, dont l'un S2 constitue une légère variante par rapport à l'autre S1.

Chaque dispositif de fixation S comprend un gougeon A, un fil D, une tige B, une plaquette C et une vis E.

Le panneau horizontal P est muni, en chacun de ses quatre coins, d'une ouverture circulaire R qui le traverse sur toute son épaisseur ou au moins débouchant sur une face. Dans chacune de ses ouvertures R est introduit, en rotation libre, un axe sous forme de gougeon A dont les extrémités sont à peu près de niveau avec les deux faces du panneau horizontal P, comme cela est représenté dans la partie du dessin en traits continus épais. En fait, le gougeon A est engagé en rotation libre à l'intérieur d'une ouverture R prévue dans chacune des deux plaques qui constituent le panneau horizontal P.

Dans le système S1, une première extrémité du fil D est fixée au gougeon A de manière que lorsque celui-ci est entraîné en rotation, le fil s'enroule autour de lui. La tige B est munie de deux passages longitudinaux I et J. La plaquette C est percée de deux trous. A partir du gougeon A, le fil passe d'abord en coulissement libre au travers d'un premier passage J de la tige B, puis aussi librement au travers d'un premier et ensuite du second trou de la plaquette C, et enfin au travers, mais sans pouvoir coulisser, du second passage I de la tige B à laquelle la deuxième extrémité du fil D est fixée.

Avant l'assemblage des deux panneaux P, Q, le dispositif de fixation est assemblé à l'intérieur du panneau horizontal P de manière que la partie du fil D munie de la plaquette C émergera hors d'une ouverture Y effectuée dans le bord longitudinal du panneau horizontal P, bord venant en contact avec le panneau vertical Q.

Les dimensions et la forme de la plaquette C et de l'ouverture Y sont choisies de façon que la plaquette C ne puisse pas, ou sinon que difficilement, passer au travers de l'ouverture Y.

Exactement en face de l'ouverture Y, et ceci à l'endroit où le panneau horizontal P doit être fixé sur le panneau vertical Q, ce dernier est muni d'une ouverture X au travers de laquelle peut passer la plaquette C.

De même, les dimensions et la forme de l'ouverture X sont choisies de sorte que la tige B puisse passer au travers de cette ouverture avec un léger jeu.

Il est possible de voir sur le dessin que, lorsque la plaquette C du système S1 est mise à l'intérieur du panneau vertical Q, une rotation du gougeon A provoque une diminution de la longueur libre du fil D, diminution qui force, d'une part, la plaquette C à venir se plaquer contre la surface interne d'une paroi du panneau vertical Q, surface située à l'endroit de l'ouverture X, et, d'autre part, la tige B à se déplacer vers et au travers des ouvertures X et Y pour venir buter contre la plaquette C.

Le gougeon A est muni d'un trou traversant N percé perpendiculairement à son axe. A hauteur du trou traversant N la périphérie du gougeon A est aussi munie d'une gorge radiale en vue de diminuer la section des parois entourant le trou N.

Dans chacune des deux sections d'extrémité du gougeon est réalisé une rainure O, O1 située sur l'axe du gougeon. De même des stries F, F1 parallèles à l'axe du gougeon A sont exécutées sur la périphérie de chaque extrémité de ce dernier.

L'extrémité du fil D passe en partie autour du gougeon A à l'intérieur de la gorge M de manière que, lorsque ce dernier est entrainé en rotation, sa partie centrale affaiblie, autour de laquelle le fil D s'enroule, devient comprimée par la tension du fil D, alors que les deux sections d'extrémité, munie des rainures O, 01, s'agrandissent, en s'écartant dans le sens des flèches G, en vue de réaliser un auto-blocage en rotation par frottement du gougeon A contre les parois de l'ouverture R. De plus, il est prévu une vis E, en prise avec un taraudage situé dans une des sections d'extrémité du gougeon A, servant à bloquer définitivement le gougeon A. La vis, qui peut être auto-taraudante, augmente bien sûr la sécurité de fixation.

La fonction de la tige B, qui s'emboîte dans le panneau Q au travers de l'ouverture X, réside dans la reprise des contraintes de cisaillement entre les deux panneaux P, Q car, si le fil D a une bonne résistance à la traction, sa résistance au cisaillement est généralement faible. Le fil D utilisé est du genre à haute résistance, par exemple en fibre de carbone, en Kevlar, etc..

Donc, à l'exception des vis E en acier, tous les autres éléments du dispositif de fixation peuvent être en aluminium, matière facilement et rentablement recyclable.

Le démontage est aussi aisé que le montage puisqu'il suffit d'ôter les vis E, de tourner le gougeon A en sens inverse à celui de la flèche L et de sortir ensuite la plaquette C au travers de l'ouverture X.

Dans le système S2, en vue de simplifier encore l'assemblage, il est proposé d'utiliser un seul fil D pour deux dispositifs de fixation II et III situés dans un même panneau horizontal et respectivement à proximité de deux bords opposés. A l'exception du circuit du fil D, tous les éléments A, B, C, E du système S2 sont identiques à ceux déjà décrits pour le système S1. De même, le circuit du fil D pour un premier dispositif de fixation II du système S2 est similaire à celui I du système S1. Le circuit du fil D pour le dispositif III est constitué par un prolongement du fil D à partir du gougeon A du dispositif II, le fil D passant ensuite sur le côté du gougeon A du dispositif III, puis dans l'ordre, au travers :
- du passage J (avec coulissement) de la tige B,
- des deux trous de la plaquette C,
- du trou I (sans coulissement) dans la tige B,
- du trou traversant N du gougeon A,

pour finalement passer sur le côté du gougeon A de l'autre dispositif II et rejoindre en continu la tige B au second passage I, le fil décrivant en quelque sorte un circuit fermé.

Comme on peut le voir sur le dessin, dans le cas du système S2, il est possible, par rotation, par exemple, du gougeon A du dispositif II, de déplacer sa tige B et, simultanément, celle du dispositif III. Ceci facilite aussi beaucoup l'assemblage ou le démontage des trois panneaux, c'est-à-dire un panneau horizontal P et deux panneaux verticaux Q. De plus, par rotation du gougeon A du dispositif III on provoque une mise sous tension du fil D qui permettra de rétracter simultanément les deux tiges B des dispositifs II et III après avoir débloqué le gougeon A du dispositif II lors du démontage.

Il faut remarquer que la mise sous tension du fil D contribue à améliorer la résistance à la flexion du panneau horizontal P.

En variante, il est aussi possible dans le système S1 de prolonger le fil D (dessiné en trait mixte) à partir du second passage I jusqu'au gougeon A auquel il sera aussi fixé, ce qui facilitera le démontage du panneau P, car une rotation inverse du gougeon A préalablement débloqué permettra de rétracter la tige B.

## Revendications

1. Dispositif de fixation de panneaux destinés à former un meuble, une étagère, une armoire, ou similaires, du genre comprenant un premier élément (C) en prise avec un premier panneau (Q), un deuxième élément (A) en prise avec un deuxième panneau (P) destiné à être assemblé essentiellement perpendiculairement au premier panneau (Q), et un troisième élément (D), sous forme d'un élément filiforme à haute résistance, en prise avec chacun desdits premier et deuxième éléments (C, A), et des moyens d'action sur le troisième élément (D) de manière à tirer, lors de l'assemblage des deux panneaux (P, Q), lesdits premier et deuxième éléments (C, A) l'un en direction de l'autre, caractérisé en ce que sur le fil (D) est monté un quatrième élément (B) déplaçable entre une première position où il se trouve sur le deuxième panneau (P) et une seconde position dans laquelle il est en prise avec les deux panneaux (P, Q) en vue de supporter essentiellement les contraintes de cisaillement agissant au niveau de leur surface de contact.

2. Dispositif de fixation selon la revendication 1, caractérisé en ce que le deuxième élément (A) est un gougeon rotatif (A) dont l'axe est essentiellement perpendiculaire au deuxième panneau (P), une première extrémité du fil (D) s'enroulant autour du gougeon (A) lorsqu'il est entraîné en rotation, le premier élément (C) est une plaquette munie de deux trous au travers desquels le fil (D) peut librement coulisser, le quatrième élément est une tige (B) munie d'un passage longitudinal (J) le long duquel le fil (D) peut librement coulisser, l'autre extrémité du fil (D) étant fixée à cette tige (B) après être passée au travers des trous de la plaquette (C) de manière que, par rotation du gougeon (A), la tige (B) vienne en prise avec deux ouvertures correspondantes (X, Y) réalisées dans les parois des deux panneaux (Q, P).

3. Dispositif selon la revendication 2, caractérisé en ce que le gougeon est muni d'un trou traversant (N) perpendiculaire à son axe de rotation, d'une gorge radiale périphérique (M) située à hauteur du trou traversant (N), et de deux rainures (O, O1) réalisées respectivement sur chacune des deux sections d'extrémité du gougeon, de manière que lorsque le gougeon (A) est radialement comprimé sous l'effet de la tension du fil (D) au niveau des parois affaiblies entourant le trou traversant (N), ses deux sections d'extrémité s'agrandissent radialement de façon à réaliser un blocage, en rotation, par frottement du gougeon (A) contre les parois d'une ouverture (R) par laquelle le gougeon est maintenu en place dans le deuxième panneau (P).

4. Dispositif selon la revendication 3, caractérisé en ce qu'une vis (E), en prise avec un taraudage réalisé dans une des sections d'extrémité du gougeon (A), est prévue pour contribuer au blocage du gougeon (A).

## Patentansprüche

1. Vorrichtung zur Befestigung von Tafeln zum Aufbau eines Mobelstücks, eines Regals, eines Schranks oder dgl., die ein erstes Bauteil (C) aufweist im Eingriff mit einer Tafel (Q), ein zweites Bauteil (A) aufweist im Eingriff mit einer zweiten Tafel (P), die dazu bestimmt ist, mit der ersten Tafel (Q) in im wesentlichen senkrechter Richtung zusammengebaut zu werden, und die ein drittes Bauteil (D) in Form eines fadenförmigen Bauteils hoher Festigkeit aufweist im Eingriff mit jedem der beiden Bauteile (C, A), sowie eine Betätigungsanordnung für das dritte Bauteil (D) aufweist, derart, daß die beiden Bauteile (C, A) während des Zusammenbaus der beiden Tafeln (P, Q) in Richtung zueinanderhin gezogen werden, **dadurch gekennzeichnet**, daß am Draht (D) ein viertes Bauteil (B) angeordnet ist, das zwischen einer ersten Stellung, in der es sich auf der zweiten Tafel (P) befindet, und einer zweiten Stellung verschiebbar ist, in der es im Eingriff ist mit den beiden Tafeln (P, Q), um so im wesentlichen die durch Scherkräfte auf Höhe der Beruhrungsflache auftretenden Belastungen aufzunehmen.

2. Vorrichtung zur Festigung nach Anspruch 1, **dadurch gekennzeichnet**, daß das zweite Bauteil (A) ein Drehzapfen (A) ist, dessen Achse im wesentlichen senkrecht zur zweiten Tafel (P) verläuft, daß ein erstes Ende des Drahtes (D) um den Zapfen (A) gewickelt wird, wenn dieser in Drehungen versetzt wird, daß das erste Bauteil (C) ein Plättchen ist, das mit zwei Öffnungen versehen ist, in denen der Draht (D) frei gleiten kann, daß das vierte Bauteil (B) ein Stab ist, der mit einem Längsdurchlaß (J) versehen ist, in dem der Draht (D) in Längsrichtung frei gleiten kann, daß das andere Ende des Drahtes (D) am Stab (B) befestigt ist, nachdem er die Öffnungen im Plättchen (C) derart durchsetzt hat, daß der Stab (B) bei Verdrehung des Zapfens (A) in zwei entsprechende Öffnungen (X, Y) eingreift, die in den Wänden der beiden Tafeln (Q, P) vorgesehen sind.

3. Vorrichtung nach Anspruch 2, **dadurch gekennzeichnet**, daß der Zapfen mit einer Durchgangsöffnung (N) senkrecht zu seiner Drehachse versehen ist, mit einer radialen Umfangsnut (M) auf Höhe der Durchgangsöffnung (N) und mit zwei Nuten (0,01), die auf den entsprechenden beiden Endabschnitten des Zapfens dergestalt vorgesehen sind, daß bei radialer Stauchung des Zapfens (A) unter der Wirkung der Spannung des Drahtes (D) auf Höhe der Wände geringerer Dicke, welche die Durchgangsöffnung (N) umgeben, die beiden Endabschnitte sich radial vergrößern, so daß eine Drehblockierung durch Reibung des Zapfens (A) an den Wänden einer Öffnung (R) erfolgt, mitttels derer der Zapfen in der zweiten Tafel (P) an Ort und Stelle gehalten wird.

4. Vorrichtung nach Anspruch 3, **dadurch gekennzeichnet**, daß eine Schraube (E) im Eingriff mit einem in einem der Endabschnitte des Zapfens (A) vorgesehenen Gewinde vorgesehen ist, die zur Blockierung des Zapfens (A) beiträgt.

## Claims

1. A device for fixing panels for constructing a piece of furniture, shelving, a cupboard or the like, of the type comprising a first element (C) which engages with a first panel (Q), a second element (A) which engages with a second panel (P) designed to be assembled essentially perpendicular to the first panel (Q), and a third element (D), in the form of a high-tensile filiform element, which engages with both the first and the second elements (C, A), and means for acting on the third element (D) so that when the two panels (P, Q) are assembled, the said first and second elements (C, A) are pulled towards one another, characterized in that on the wire (D) is mounted a fourth element (B) which can be displaced between a first position where it is located on the second panel (P) and a second position in which it engages with the two panels (P, Q) so as substantially to withstand the shearing stresses acting at the level of their contact surface.

2. A fixing device according to claim 1, characterized in that the second element (A) is a rotating pin (A), the axis of which is substantially perpendicular to the second panel (P), a first end of the wire (D) being wound around the pin (A) when it is forced into rotation, the first element (C) is a disc provided with two holes through which the wire (D) may freely slide, the fourth element is a rod (B) provided with a longitudinal passage (J), along which the wire (D) may freely slide, with the other end of the wire (D) being fixed to this rod (B) after having passed through the holes in disc (C) so that, by rotating the pin (A), the rod (B) comes into engagement with two corresponding apertures (X, Y) made in the wall of the two panels (Q, P).

3. A device according to claim 2, characterized in that the pin is provided with a through hole (N) perpendicular to its axis of rotation, a peripheral radial groove (M) situated at the same height as the through hole (N), and two slots (O, 01) made respectively on each of two end sections of the pin, so that when the pin (A) is radially compressed under the effect of the tension of the wire (D) at the level of the weakened walls surrounding the through hole (N), its two end sections become larger radially so as to lock the pin, in rotation, by the friction of the pin (A) against the walls of an aperture (R) by which the pin is held in place in the second panel (P).

4. A device according to claim 3, characterized in that a screw (E), in engagement with a thread made in one of the end sections of the pin (A), is provided to assist the locking of the pin (A).
